# EUROPEAN PATENT APPLICATION

(11) **EP 3 640 506 A1**
(43) Date of publication of application: **22.04.2020**
(21) Application number: 18825532.7
(22) Date of filing: 25.06.2018
(51) Int. Cl.: F16J 15/3244, F16J 15/3204, F16J 15/3256

(54) **SEALING DEVICE**

(30) Priority: 29.06.2017 JP 2017127327
(71) Applicant: NOK Corporation, Tokyo 105-8585 (JP)
(72) Inventor: SAKANO Yuya, Fukushima-shi Fukushima 960-1193 (JP); MATSUI Hiroki, Fukushima-shi Fukushima 960-1193 (JP); HAMAMOTO Kokichi, Fukushima-shi Fukushima 960-1193 (JP); NAKAGAWA Takehiro, Fukushima-shi Fukushima 960-1193 (JP); YONAI Hisato, Fukushima-shi Fukushima 960-1193 (JP)
(74) Representative: Prüfer & Partner mbB Patentanwälte · Rechtsanwälte
(86) International application number: PCT/JP2018/024046
(87) International publication number: WO 2019/004141

(57) **Abstract**

To suppress ooze of a target to be sealed regardless of a value of rotational speed of a shaft even in the case where pumping action is utilized.

Provided is a sealing apparatus for sealing an annular gap between a shaft and a hole into which the shaft is to be inserted, the sealing apparatus including: a sealing apparatus body to be fitted into the hole; and a slinger to be mounted on the shaft, wherein the sealing apparatus body includes a reinforcing ring annular around an axis line, and an elastic body portion which is attached to the reinforcing ring, and which is annular around the axis line, the slinger includes a flange portion which is a portion extending toward an outer peripheral side, and annular around the axis line, the elastic body portion includes an end-face lip which is a lip extending toward one side in the axis line direction, contacting the flange portion from another side in the axis line direction, and being annular around the axis line, at least one groove is formed on the other side of the flange portion of the slinger, and at least one circumferential-direction projection is formed on an inner peripheral surface of the end-face lip, the circumferential-direction projection extending in an annular shape around the axis line, and projecting between the inner peripheral surface of the end-face lip and a surface of the flange portion on the other side.

## Description

### Technical Field

The present invention relates to a sealing apparatus to realize sealing between a shaft and a hole into which this shaft is to be inserted.

### Background Art

In a vehicle, general-purpose machine, or the like, in order to prevent leakage of a target to be sealed such as, for example, a lubricant, and in order to seal a gap between a shaft and a hole into which this shaft is to be inserted, a sealing apparatus has been conventionally used. In such a sealing apparatus, sealing between the shaft and the sealing apparatus is realized by causing a seal lip to be brought into contact with the shaft or with an annular member mounted on the shaft. Contact between this seal lip and the shaft for providing sealing also becomes sliding resistance (torque resistance) to the shaft. In recent years, in response to a request for fuel efficiency of a vehicle, or the like, a sealing apparatus is desired to reduce sliding resistance to the shaft, and is desired to have a structure which can reduce sliding resistance to the shaft while maintaining or improving sealing performance..

It is considered to increase the number of seal lips in order to improve sealing performance of the sealing apparatus. However, sliding resistance increases as a result of the increase in number of seal lips. To address this, a structure is disclosed where, instead of realizing sealing by increasing the number of seal lips, a screw structure is provided to a seal lip or to an annular member mounted on a shaft so as to improve sealing performance of a sealing apparatus through pumping action exerted by the screw structure (see, for example, Patent Literatures 1, 2).

### Document List

### Patent Literatures

Patent Literature 1: Japanese Patent No. 5637172
Patent Literature 2: International Publication No. WO2015/190450

### Summary of Invention

### Technical Problem

In such a conventional sealing apparatus which utilizes pumping action, it is possible to realize reduction of sliding resistance while realizing improvement of sealing performance. However, in such a conventional sealing apparatus which utilizes pumping action, that is, in a so-called end-face seal-type sealing apparatus where a seal lip contacts a flange surface of a slinger fixed to a shaft, a target to be sealed may ooze outside when rotational speed of the shaft becomes high.

In this manner, there has been a demand for the conventional sealing apparatus, which utilizes pumping action, to have a structure where a target to be sealed does not ooze even in the case where the rotational speed of the shaft becomes high.

The present invention has been made in view of the above mentioned problem, and it is an object of the present invention to provide a sealing apparatus which can suppress ooze of a target to be sealed regardless of a value of rotational speed of a shaft even in the case where pumping action is utilized.

### Solution to Problem

To achieve the above-described object, a sealing apparatus according to the present invention is a sealing apparatus for sealing an annular gap between a shaft and a hole into which the shaft is to be inserted, the sealing apparatus being characterized by including: a sealing apparatus body to be fitted into the hole; and a slinger to be mounted on the shaft, wherein the sealing apparatus body includes a reinforcing ring annular around an axis line, and an elastic body portion which is formed of an elastic body attached to the reinforcing ring, and which is annular around the axis line, the slinger includes a flange portion which is a portion extending toward an outer peripheral side, and annular around the axis line, the elastic body portion includes an end-face lip which is a lip extending toward one side in a direction of the axis line, contacting the flange portion from another side in the direction of the axis line, and annular around the axis line, at least one groove is formed on the other side of the flange portion of the slinger, and at least one circumferential-direction projection is formed on an inner peripheral surface of the end-face lip, the circumferential-direction projection extending in an annular shape around the axis line, and projecting between the inner peripheral surface of the end-face lip and a surface of the flange portion on the other side.

In the sealing apparatus according to one aspect of the present invention, the circumferential-direction projection has a corrugated shape having an unevenness.

In the sealing apparatus according to one aspect of the present invention, the circumferential-direction projection is disposed on an inner peripheral side of a slinger contact portion which is a portion where the end-face lip contacts the flange portion of the slinger.

In the sealing apparatus according to one aspect of the present invention, a radial-direction projection extending along a radial direction is formed on the inner peripheral surface of the end-face lip in addition to the circumferential-direction projection, and the circumferential-direction projection be disposed on an outer peripheral side of the radial-direction projection.

In the sealing apparatus according to one aspect of the present invention, the circumferential-direction projection is formed on the end-face lip such that the circumferential-direction projection is separated from the slinger contact portion toward the inner peripheral side by a predetermined interval.

In the sealing apparatus according to one aspect of the present invention, the groove formed on the slinger is a screw groove.

### Effects of Invention

According to a sealing apparatus according to the present invention, even in the case where pumping action is utilized, it is possible to suppress ooze of a target to be sealed regardless of a value of rotational speed of a shaft.

### Brief Description of Drawings

[Fig. 1] A cross-sectional view showing a cross-section taken along an axis line x for illustrating a schematic configuration of a sealing apparatus according to a first embodiment of the present invention.
[Fig. 2] A partially enlarged cross-sectional view showing, in an enlarged manner, a part of the cross-section taken along the axis line of the sealing apparatus according to the first embodiment of the present invention.
[Fig. 3] A partially enlarged perspective view of an elastic body portion of the sealing apparatus shown in Fig. 1 in a state where a portion of the elastic body portion on the inner peripheral side from a base portion is cut on a plane taken along the axis line.
[Fig. 4] A partially enlarged cross-sectional view of the elastic body portion of the sealing apparatus shown in Fig. 1.
[Fig. 5] A view of a slinger of the sealing apparatus shown in Fig. 1 as viewed from the outside.
[Fig. 6] A partially enlarged cross-sectional view of the sealing apparatus according to the first embodiment of the present invention in a usage state where the sealing apparatus is mounted on a housing and on a shaft inserted into a shaft hole.
[Fig. 7] A view for illustrating a state of flow of a target to be sealed which is caused by action of radial-direction projections and a circumferential-direction projection on an end-face lip in the sealing apparatus according to the first embodiment of the present invention.
[Fig. 8] A partially enlarged cross-sectional view showing, in an enlarged manner, a part of the cross section taken along an axis line of a sealing apparatus according to a second embodiment of the present invention.
[Fig. 9] A perspective view of a sealing apparatus body of a sealing apparatus according to a third embodiment of the present invention, as viewed from inside.
[Fig. 10] A view for illustrating a state of flow of a target to be sealed which is caused by action of a circumferential-direction projection on an end-face lip according to the third embodiment of the present invention.
[Fig. 11] A perspective view of a sealing apparatus body of a sealing apparatus according to a fourth embodiment of the present invention, as viewed from inside.
[Fig. 12] A perspective view of a sealing apparatus body of a sealing apparatus according to a fifth embodiment of the present invention, as viewed from inside.
[Fig. 13] A cross-sectional view showing a cross-section taken along an axis line for illustrating a schematic configuration of a sealing apparatus according to a sixth embodiment of the present invention.
[Fig. 14] A perspective view of a sealing apparatus body of the sealing apparatus according to the sixth embodiment of the present invention, as viewed from inside.
[Fig. 15] Views for describing modifications of a groove of the slinger of the sealing apparatus, wherein Fig. 15(a) shows one modification of the groove, and Fig. 15(b) shows another modification of the groove.

### Description of Embodiments

Hereinafter, embodiments of the present invention will be described with reference to the accompanying drawings.

### <First embodiment>

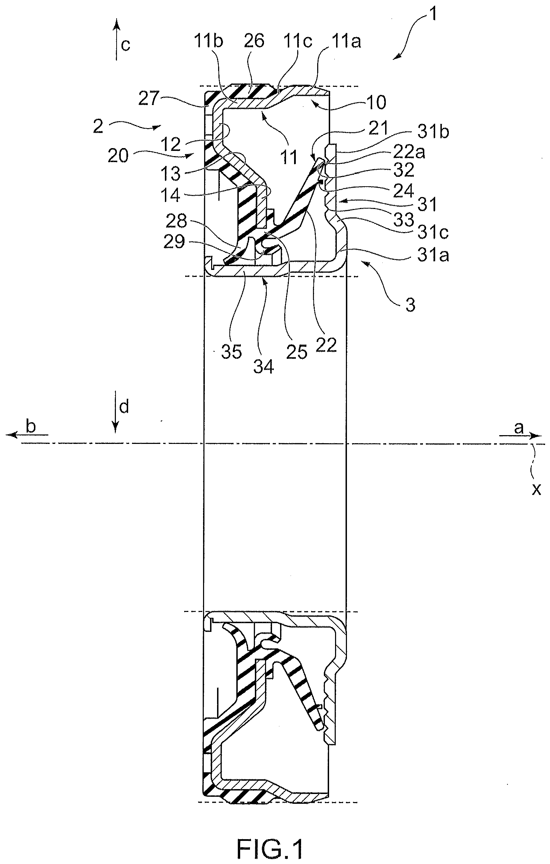

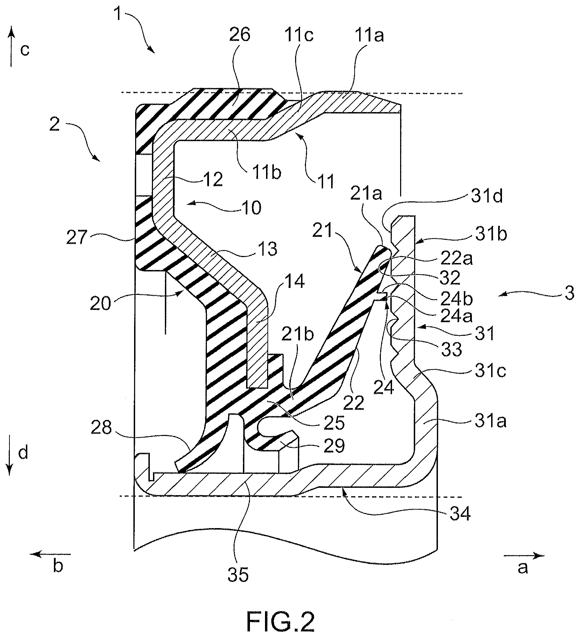

Fig. 1 is a cross-sectional view showing a cross-section taken along an axis line x for illustrating a schematic configuration of a sealing apparatus 1 according to a first embodiment of the present invention, and Fig. 2 is a partially enlarged cross-sectional view showing, in an enlarged manner, a part of the cross-section taken along the axis line x of the sealing apparatus 1 according to the first embodiment of the present invention. The sealing apparatus 1 according to the present embodiment is a sealing apparatus for sealing an annular gap between a shaft and a hole into which this shaft is to be inserted. The sealing apparatus 1 according to the present invention is used, in a vehicle or a general-purpose machine, to seal a gap between a shaft and a hole (shaft hole) which is formed at a housing, or the like, and into which this shaft is inserted. For example, the sealing apparatus is used to seal an annular space between a crankshaft of an engine and a crank hole, which is a shaft hole formed at a front cover or a cylinder block and a crankcase. Targets to which the sealing apparatus 1 according to the first embodiment of the present invention is applied are not limited to the above.

Hereinafter, for the purpose of convenience of the description, a direction indicated by an arrow a (see Fig. 1) in an axis line x direction (one side in the direction of the axis line) is set as an inner side, and a direction indicated by arrow b (see Fig. 1) in the axis line x direction (another side in the direction of the axis line) is set as an outer side. More specifically, the inner side is a side of space to be sealed (target to be sealed side) and a side of space where a target to be sealed, such as a lubricant, exists, and the outer side is an opposite side of the inner side. Further, in a direction perpendicular to the axis line x (hereinafter, also referred to as "radial direction"), a direction away from the axis line x (a direction indicated by an arrow c in Fig. 1) is set as an outer peripheral side, and a direction approaching the axis line x (a direction indicated by an arrow d in Fig. 1) is set as an inner peripheral side.

As shown in Fig. 1, the sealing apparatus 1 includes a sealing apparatus body 2 to be fitted into a hole as a mounting target which will be described later, and a slinger 3 to be mounted on a shaft as a mounting target which will be described later. The sealing apparatus body 2 includes a reinforcing ring 10 annular around the axis line x, and an elastic body portion 20 which is formed of an elastic body attached to the reinforcing ring 10 and which is annular around the axis line x. The slinger 3 includes a flange portion 31 which is a portion extending toward the outer peripheral side (in the direction of the arrow c), and annular around the axis line x. The elastic body portion 20 includes an end-face lip 21 which is a lip extending toward one side (the inner side, in the direction of the arrow a) in the axis line x direction, contacting the flange portion 31 from another side (the outer side, in the direction of the arrow b) in the axis line x direction, and annular around the axis line x.

At least one groove 33 is formed on another side (outer side) of the flange portion 31 of the slinger 3. At least one circumferential-direction projection 24 is formed on the surface of the end-face lip 21 on the inner peripheral side (inner peripheral surface 22).

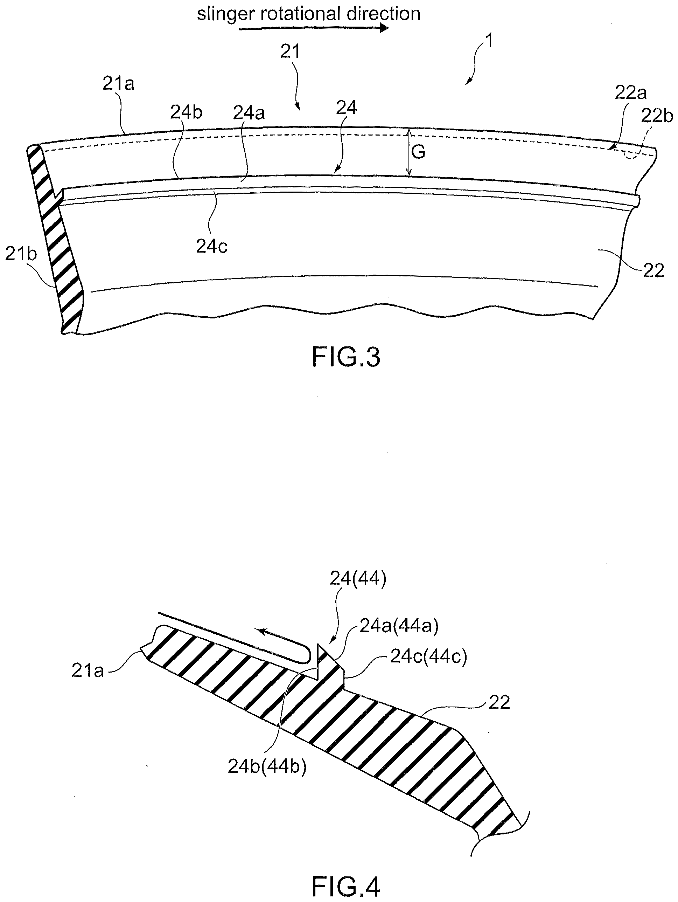

As will be described later, the circumferential-direction projection 24 extends in an annular shape around the axis line x (see Fig. 3 which will be described later), and projects from the end-face lip 21 at a position on the other side of the slinger contact portion 22a in the axis line x direction. That is, the circumferential-direction projection 24 projects along the axis line x direction between the inner peripheral surface 22 of the end-face lip 21 and an outer side surface 31d which is a surface of the flange portion 31 on the other side.

Hereinafter, respective configurations of the sealing apparatus body 2 and the slinger 3 of the sealing apparatus 1 will be specifically described.

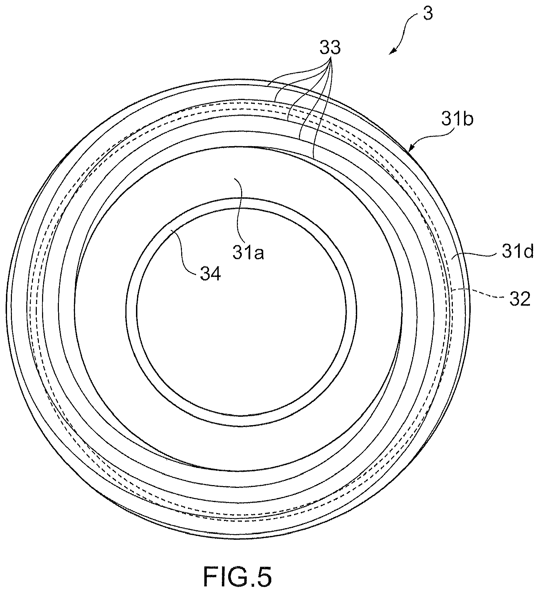

As shown in Fig. 1 and Fig. 2, in the sealing apparatus body 2, the reinforcing ring 10 is an annular metal member which is centered or substantially centered on the axis line x and is formed so that the sealing apparatus body 2 is pressed, engaged and fitted into a shaft hole of a housing which will be described later. The reinforcing ring 10 includes, for example, a tubular portion 11 which is a tubular portion located on the outer peripheral side, a disk portion 12 which is a hollow disk-shaped portion extending from a tip portion on the outer side of the tubular portion 11 to the inner peripheral side, a conical ring portion 13 which is a conical cylindrical annular portion extending from a tip portion on the inner peripheral side of the disk portion 12 to the inner side and the inner peripheral side, and a disk portion 14 which is a hollow disk-shaped portion extending in the radial direction from a tip portion on the inner side or the inner peripheral side of the conical ring portion 13 to the inner peripheral side and reaching a tip portion on the inner peripheral side of the reinforcing ring 10. More specifically, the tubular portion 11 of the reinforcing ring 10 includes an outer peripheral side cylindrical portion 11a which is a cylindrical or substantially cylindrical portion located on the outer peripheral side, an inner peripheral side cylindrical portion 11b which is a cylindrical or substantially cylindrical portion extending on the outer side and the inner peripheral side of the outer peripheral side cylindrical portion 11a, and a connecting portion 11c which is a portion connecting the outer peripheral side cylindrical portion 11a and the inner peripheral side cylindrical portion 11b. The outer peripheral side cylindrical portion 11a of the cylindrical portion 11 is fitted into a shaft hole 101 so that, when the sealing apparatus body 2 is fitted into the shaft hole 101 of a housing 100 (Fig. 5) which will be described later, the axis line x of the sealing apparatus body 2 matches an axis line of the shaft hole 101. An elastic body portion 20 is attached to the reinforcing ring 10 from a substantially outer peripheral side and the outer side, so as to reinforce the elastic body portion 20 by the reinforcing ring 10.

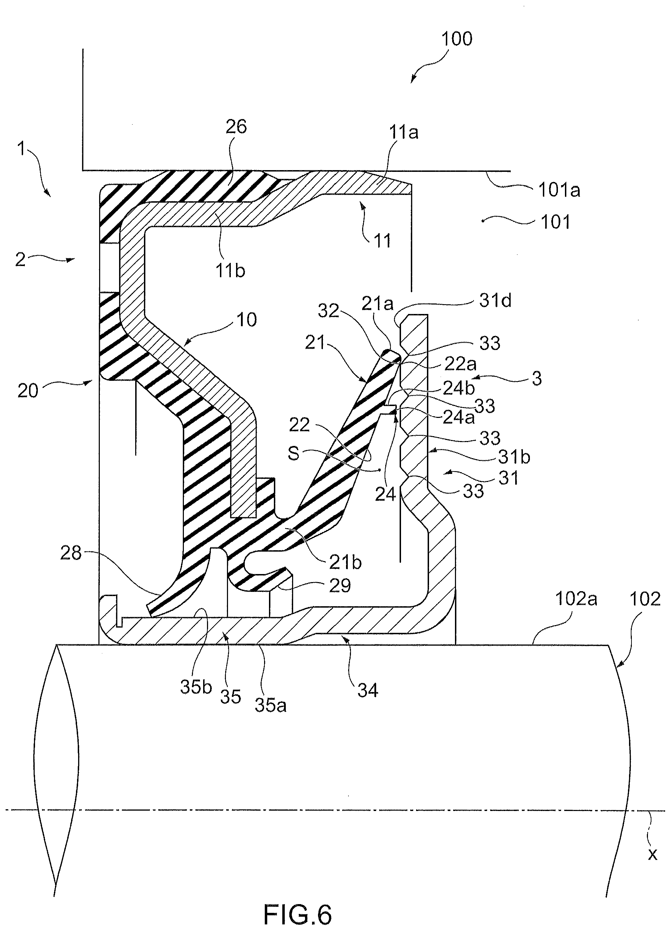

As illustrated in Fig. 1 and Fig. 2, the elastic body portion 20 includes a base portion 25 which is a portion attached to a tip portion on the inner peripheral side of the disk portion 14 of the reinforcing ring 10, a gasket portion 26 which is a portion attached to the tubular portion 11 of the reinforcing ring 10 from the outer peripheral side, and a rear cover portion 27 which is a portion attached to the reinforcing ring 10 between the base portion 25 and the gasket portion 26 from the outer side. More specifically, as illustrated in Fig. 2, the gasket portion 26 is attached to the inner peripheral side cylindrical portion 11b of the tubular portion 11 of the reinforcing ring 10. Further, an outer diameter of the gasket portion 26 is greater than a diameter of a later described inner peripheral surface 101a (see Fig. 6) which defines the shaft hole 101. Therefore, in the case where the sealing apparatus body 2 is fitted into the shaft hole 101 which will be described later, the gasket portion 26 is compressed in the radial direction between the inner peripheral side cylindrical portion 11b of the reinforcing ring 10 and the shaft hole 101 and seals the gap between the shaft hole 101 and the inner peripheral side cylindrical portion 11b of the reinforcing ring 10. By this means, space between the sealing apparatus body 2 and the shaft hole 101 is sealed. The gasket portion 26 does not have to be have an outer diameter greater than the diameter of the inner peripheral surface of the shaft hole 101 over the whole axis line x direction, and may have the outer diameter partially greater than the diameter of the inner peripheral surface of the shaft hole 101. For example, an annular convex portion whose tip has a diameter greater than the diameter of the inner peripheral surface 101a defining the shaft hole 101 may be formed on a surface on the outer peripheral side of the gasket portion 26.

Further, at the elastic body portion 20, the end-face lip 21 extends from the base portion 25 to the inner side (direction of the arrow a) in an annular shape centered on or substantially centered on the axis line x, and is formed so that, in the usage state of the sealing apparatus 1 which will be described later where the sealing apparatus 1 is mounted on a desired position at an mounting target, a tip portion contacts the flange portion 31 of the slinger 3 from the outer side with a predetermined interference (slinger contact portion 22a). The end-face lip 21 has, for example, a conical cylindrical shape whose diameter becomes greater toward the inner side (direction of the arrow a) in the axis line x direction. That is, as illustrated in Fig. 1 and Fig. 2, the end-face lip 21 extends obliquely with respect to the axis line x from the base portion 25 to the inner side and the outer peripheral side on a cross-section along the axis line x (hereinafter, also simply referred to as a "cross-section"). At least one circumferential-direction projection 24 is formed on the inner peripheral surface 22 of the end-face lip 21. Details of the circumferential-direction projection 24 will be described later.

Further, the elastic body portion 20 includes a dust lip 28 and an intermediate lip 29. The dust lip 28 is a lip extending from the base portion 25 toward the axis line x, extends from the base portion 25 in an annular shape centered on or substantially centered on the axis line x, and is formed so that, in the usage state of the sealing apparatus 1 which will be described later, a tip portion contacts the slinger 3 from the outer peripheral side with a predetermined interference. The dust lip 28 has, for example, a conical cylindrical shape whose diameter becomes smaller toward the outer side (direction of the arrow b) in the axis line x direction. The dust lip 28 prevents a foreign matter such as dust and moisture from intruding inside of the sealing apparatus 1 from the outer side which is the opposite side of the target to be sealed side in the usage state. The dust lip 28 may be formed so as not to contact the slinger 3 in the usage state of the sealing apparatus 1.

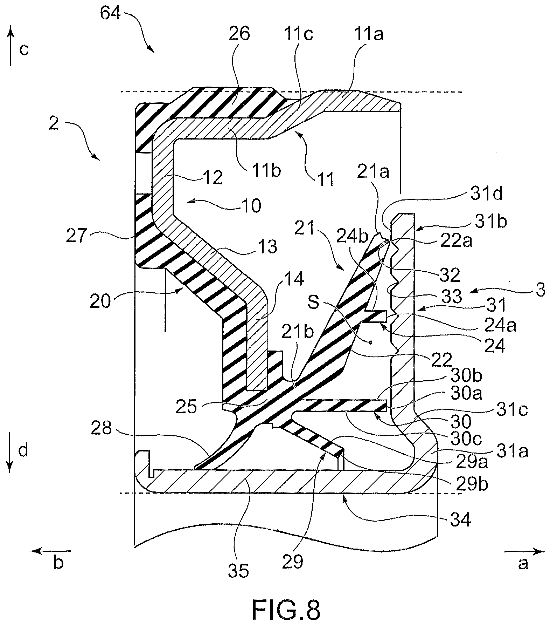

As illustrated in Fig. 2, the intermediate lip 29, which is a lip extending from the base portion 25 toward the inner side to have a substantially L shape in the cross section, extends from the base portion 25 in an annular shape centered on or substantially centered on the axis line x direction, and forms an annular concave portion which opens toward the inner side between the intermediate lip 29 and the base portion 25. The intermediate lip 29 does not contact the slinger 3 in the usage state of the sealing apparatus 1. The intermediate lip 29 is formed to, in the usage state, in the case where a target to be sealed oozes inside over the slinger contact portion 22a where the end-face lip 21 and the slinger 3 contact, prevent the oozing target to be sealed from flowing out to the dust lip 28 side. As illustrated in Fig. 8 which will be described later, the intermediate lip 29 may have a conical cylindrical shape whose diameter becomes smaller toward the inner side in the axis line x direction. The intermediate lip 29 may be formed such that the tip of the intermediate lip 29 contacts the slinger 3.

Next, the shape of the end-face lip 21 will be described in more detail. Fig. 3 is a partially enlarged perspective view of the elastic body portion 20, as viewed from the inner peripheral side in a state where a portion of the elastic body portion 20 on the inner peripheral side from the base portion 25 is cut on a plane taken along the axis line x. As shown in Fig. 3, at least one circumferential-direction projection 24 is formed on the inner peripheral surface 22 of the end-face lip 21 in an annular shape having a fixed width on the same or substantially the same circumference centered on or substantially centered on the axis line x. In this embodiment, one circumferential-direction projection 24 is formed on the end-face lip 21. However, not limited to this, a plurality of circumferential-direction projections 24 having different radii may be formed in a shape centered on or substantially centered on the axis line x. In this embodiment, the circumferential-direction projection 24 is formed on the other side (the outer side or the inner peripheral side) from a pumping region, which will be described later, of the sealing apparatus 1. It is preferable that the circumferential-direction projection 24 be formed in a circular current region which will be described later.

Further, as illustrated in Fig. 1, 2, the circumferential-direction projection 24 projects from the end-face lip 21 in a region on the outer side of the slinger contact portion 22a in the axis line x direction. A tip surface 24a, which is the end portion of the circumferential-direction projection 24 on the inner side, is disposed at a position on the outer side of the slinger contact portion 22a in the axis line x direction. As described above, the circumferential-direction projection 24 is formed in a shape such that the circumferential-direction projection 24 does not contact the slinger 3 in the usage state of the sealing apparatus 1, whereby sliding resistance to the slinger 3 does not increase by the circumferential-direction projection 24.

Further, the shape of the circumferential-direction projection 24 in cross section (see Fig. 2) perpendicular to the extending direction along the circumferential direction is not limited to a rectangular shape, and may be any of various shapes, for example, any of various shapes, such as a triangular shape, a quadrangular shape, a trapezoidal shape, or an inverted U shape. At least in the usage state of the sealing apparatus 1, it is preferable that an outer peripheral surface 24b, which is the surface of the circumferential-direction projection 24 facing the outer peripheral side, be a surface facing the outer peripheral side, and be a surface extending along the axis line x, or be a surface inclined toward the inner peripheral surface 22 side and extending obliquely toward the outer peripheral side or the inner peripheral side with respect to the axis line x.

Particularly, as shown in Fig. 4, the shape of the circumferential-direction projection 24 in cross section perpendicular to the extending direction along the circumferential direction may be a trapezoidal shape, for example. In this case, it is preferable that this shape in cross section be a trapezoidal shape where the outer peripheral surface 24b is longer than an inner peripheral surface 24c, which is the surface of the circumferential-direction projection 24 facing the inner peripheral side, and between the inner peripheral surface 24c and the outer peripheral surface 24b, the tip surface 24a is formed in a manner such that the tip surface 24a is inclined so as to further separate from the inner peripheral surface 22 as progress from the inner peripheral side toward the outer peripheral side.

The circumferential-direction projection 24 is formed with an interval G from the slinger contact portion 22a, and is formed on the inner peripheral side (outer side) of the slinger contact portion 22a, that is, on the side of a root 21b of the end-face lip 21, of the slinger contact portion 22a.

Specifically, as shown in Fig. 3, the outer peripheral surface 24b of the circumferential-direction projection 24 is positioned such that a predetermined interval G is formed from an outer edge 22b, which is an edge portion on the outer side (inner peripheral side) of the slinger contact portion 22a, to the outer peripheral surface 24b. This interval G is an interval such that the circumferential-direction projection 24 exists in the circular current region, which will be described later, on the inner peripheral side of a region where pumping action based on the grooves 33 of the slinger 3 occurs (pumping region) in the usage state of the sealing apparatus 1, which will be described later.

Further, as shown in Fig. 2, the circumferential-direction projection 24 is formed to have the shape and height where the circumferential-direction projection 24 does not contact the slinger 3 in the usage state of the sealing apparatus 1. That is, in the usage state, the height of the circumferential-direction projection 24 from the inner peripheral surface 22 and the interval G are set such that the circumferential-direction projection 24 does not contact the surface of the flange portion 31 of the slinger 3 on the outer side. That is, the height of the circumferential-direction projection 24 is set such that even the portion of the outer peripheral surface 24b of the circumferential-direction projection 24 having the maximum height does not contact the outer side surface 31d of the flange portion 31 of the slinger 3. In the usage state of the sealing apparatus 1, the circumferential-direction projection 24 does not contact the flange portion 31 of the slinger 3, whereby sliding resistance to the slinger 3 does not increase by the circumferential-direction projection 24.

As described above, the elastic body portion 20 includes the end-face lip 21, the base portion 25, the gasket portion 26, the rear cover portion 27, the dust lip 28 and the intermediate lip 29, respective portions are integrated, and the elastic body portion 20 is integrally formed with the same material.

The above-described reinforcing ring 10 is formed with a metal material, and examples of this metal material can include, for example, stainless steel and SPCC (cold rolled steel sheet). Further, examples of the elastic body of the elastic body portion 20 can include, for example, various kinds of rubber materials. The various kinds of rubber materials can include, for example, synthetic rubber such as nitrile rubber (NBR), hydrogenated nitrile rubber (H-NBR), acryl rubber (ACM) and fluorine-containing rubber (FKM).

The reinforcing ring 10 is manufactured through, for example, press work or forging, and the elastic body portion 20 is molded through cross-linking (vulcanization) molding using a mold. Upon this cross-linking molding, the reinforcing ring 10 is disposed in the mold, the elastic body portion 20 is adhered to the reinforcing ring 10 through cross-linking adhesion, and the elastic body portion 20 and the reinforcing ring 10 are integrally molded.

The slinger 3 is an annular member attached to the shaft in the usage state of the sealing apparatus 1 which will be described later, and is an annular member centered on or substantially centered on the axis line x. The slinger 3 has a cross-section having a substantially L shape, and includes the flange portion 31 and a cylindrical or substantially cylindrical tubular portion 34 which is connected to an end portion on the inner peripheral side of the flange portion 31 and which extends in the axis line x direction.

The flange portion 31 specifically includes an inner peripheral side disk portion 31a having a hollow disk shape or a substantially hollow disk shape extending from the tubular portion 34 in the radial direction, an outer peripheral side disk portion 31b in a hollow disk shape or a substantially hollow disk shape which expands on the outer peripheral side of the inner peripheral side disk portion 31a and which extends in the radial direction, and a connecting portion 31c which connects an end portion on the outer peripheral side of the inner peripheral side disk portion 31a and an end portion on the inner peripheral side of the outer peripheral side disk portion 31b. The outer peripheral side disk portion 31b is located outer side of the inner peripheral side disk portion 31a in the axis line x direction. Note that the shape of the flange portion 31 is not limited to the above-described shape, and may be various shapes in accordance with an application target. For example, the flange portion 31 does not have to include the inner peripheral side disk portion 31a and the connecting portion 31c, and the outer peripheral side disk portion 31b may extend to the tubular portion 34 and may be connected to the tubular portion 34, and may be a portion in a hollow disk shape or a substantially hollow disk shape extending from the tubular portion 34 in the radial direction.

The lip contact portion 32 which is a portion where the slinger 3 contacts the end-face lip 21 is located on the outer side surface 31d which is a surface facing the outer side of the outer peripheral side disk portion 31b at the flange portion 31. It is preferable that the outer side surface 31d is a surface along a plane expanding in the radial direction. Further, as illustrated in Fig. 5, a groove 33 is formed with a concave portion which is concave inward on the outer side surface 31d of the flange portion 31. The groove 33 is, for example, a screw groove. With this groove 33, it is possible to cause pumping action when the slinger 3 rotates. On the outer side surface 31d of the flange portion 31, the groove 33 is formed over a region from the inner peripheral side of the lip contact portion 32 to the outer peripheral side of the lip contact portion 32. The groove 33 may be formed while extending from an end portion on the inner peripheral side toward an end portion on the outer peripheral side on the outer side surface 31d of the outer peripheral side disk portion 31b, or may be formed in a region (periphery) of a width of part of the radial direction of the outer side surface 31d including the lip contact portion 32. Further, the groove 33 may be located on the inner peripheral side of the lip contact portion 32 on the outer side surface 31d of the outer peripheral side disk portion 31b. For example, a plurality of grooves 33 are formed on the outer side surface 31d of the flange portion 31, and, on the outer side surface 31d of the flange portion 31, as illustrated in Fig. 5, for example, four screw grooves 33 are formed, and these four screw grooves 33 form a four-start screw. The number of grooves 33 and a shape formed by the grooves 33 extending may be other types of screws other than the four-start screw. The grooves 33 have, for example, a shape along a line drawn on a plane when a screw groove in a spiral manner formed on a conical surface is projected on the plane orthogonal to an axis line of this conical surface.

Further, at the slinger 3, as illustrated in Fig. 2, the tubular portion 34 has a cylindrical portion 35 which is at least partially cylindrical or substantially cylindrical portion, and this cylindrical portion 35 is formed so as to be able to be fitted into the shaft. That is, an inner diameter of the cylindrical portion 35 is smaller than a diameter of the outer peripheral surface of the shaft so that the cylindrical portion 35 can be interference-fitted at the shaft. The slinger 3 is not limited to a part fixed by the cylindrical portion 35 being interference-fitted at the shaft, and may be fixed at the shaft through adhesion at the tubular portion 34, or may be fixed at the shaft using other publicly known fixing method. Note that the whole of the tubular portion 34 may be formed with the cylindrical portion 35.

The slinger 3 is made using a metal material as a base material, and, for example, made using SPCC (cold rolled steel sheet) as a base material, by phosphate coating being performed on the SPCC to perform rust-proofing. Examples of the phosphate coating can include, for example, zinc phosphate coating. With the slinger 3 having high rust-proofing, it is possible to suppress occurrence of rust at the lip contact portion 32 which is a sliding portion with respect to the end-face lip 21, so that it is possible to maintain a sealing function and sealing performance of the end-face lip 21 longer. Further, because the slinger 3 is subjected to rust proofing, it is possible to suppress change of the shape of the groove 33 due to rusting, so that it is possible to suppress reduction of a pumping effect exerted by the grooves 33. As a base material of the slinger 3, other metals such as stainless, which excels in rust resistance and rust-proofness may be used. Further, rust-proofing to be performed on the base material of the slinger 3 may be other treatment such as metal plating.

Action of the sealing apparatus 1 having the above-described configuration will be described next. Fig. 6 is a partially enlarged cross-sectional view of the sealing apparatus 1 in a usage state where the sealing apparatus 1 is mounted on the housing 100 as an attachment target and the shaft 102 inserted into the shaft hole 101 which is a through-hole formed at the housing 100. The housing 100 is, for example, a front cover of an engine or a cylinder block and a crank case, and the shaft hole 101 is a crank hole formed at the front cover, or the cylinder block and the crank case. Further, the shaft 102 is, for example, a crank shaft.

As illustrated in Fig. 6, in the usage state of the sealing apparatus 1, the sealing apparatus body 2 is fitted into the shaft hole 101 by being pressed into the shaft hole 101, and the slinger 3 is mounted on the shaft 102 by being interference-fitted at the shaft 102. More specifically, the outer peripheral side cylindrical portion 11a of the reinforcing ring 10 contacts the inner peripheral surface 101a of the shaft hole 101, so that a shaft center of the sealing apparatus body 2 is made to match a shaft center of the shaft hole 101, and the gasket portion 26 of the elastic body portion 20 tightly contacts the inner peripheral surface 101a of the shaft hole 101 by the gasket portion 26 of the elastic body portion 20 being compressed in the radial direction between the inner peripheral surface 101a of the shaft hole 101 and the inner peripheral side cylindrical portion 11b of the reinforcing ring 10, so that sealing between the sealing apparatus body 2 and the shaft hole 101 is realized. Further, the cylindrical portion 35 of the slinger 3 is pressed into the shaft 102, and the inner peripheral surface 35a of the cylindrical portion 35 tightly contacts the outer peripheral surface 102a of the shaft 102, so that the slinger 3 is fixed at the shaft 102.

In the usage state of the sealing apparatus 1, relative positions between the sealing apparatus body 2 and the slinger 3 in the axis line x direction are determined so that the end-face lip 21 of the elastic body portion 20 contacts the lip contact portion 32 which is the portion of the outer side surface 31d of the outer peripheral side disk portion 31b of the flange portion 31 of the slinger 3 at the slinger contact portion 22a which is the portion on a side of the tip 21a of the inner peripheral surface 22. Further, a portion on the tip side of the dust lip 28 contacts the tubular portion 34 of the slinger 3 from the outer peripheral side. The dust lip 28, for example, contacts the outer peripheral surface 35b of the cylindrical portion 35 of the slinger 3.

In this manner, in the usage state of the sealing apparatus 1, the end-face lip 21 contacts the lip contact portion 32 of the flange portion 31 so that the slinger 3 can slide at the slinger contact portion 22a, and the end-face lip 21 and the slinger 3 aiming at preventing the target to be sealed such as a lubricant from oozing inside from the side of the target to be sealed beyond the slinger contact portion 22a and the lip contact portion 32. Further, the dust lip 28 contacts the tubular portion 34 so that the tubular portion 34 of the slinger 3 can slide, and aims at preventing the foreign matter from entering inside from outside.

Further, in the usage state of the sealing apparatus 1, the groove 33 which forms a four-start screw formed at the outer peripheral side disk portion 31b of the flange portion 31 of the slinger 3 provides pumping action in the case where the shaft (slinger 3) rotates. By rotation of the shaft (slinger 3), pumping action occurs in a region in the vicinity of the slinger contact portion 22a and the lip contact portion 32 in narrow space S which is space between the flange portion 31 and the end-face lip 21. By this pumping action, even in the case where the target to be sealed oozes from the target-to-be-sealed side to the narrow space S, the target to be sealed which has oozed is returned from the narrow space S to the target-to-be-sealed side beyond the slinger contact portion 22a and the lip contact portion 32. In this manner, by the pumping action occurring by the groove 33 formed at the flange portion 31 of the slinger 3, ooze of the target to be sealed to the narrow space S is suppressed.

In the narrow space S, the target to be sealed which has further oozed to the inner peripheral side beyond the region where the pumping action by the groove 33 occurs (hereinafter, also referred to as a pumping region) rotates around the axis line x in the rotation direction of the slinger 3 in the region adjacent to the pumping region on the inner peripheral side by rotation of the shaft, and is retained in the region (hereinafter, also referred to as a circular current region).

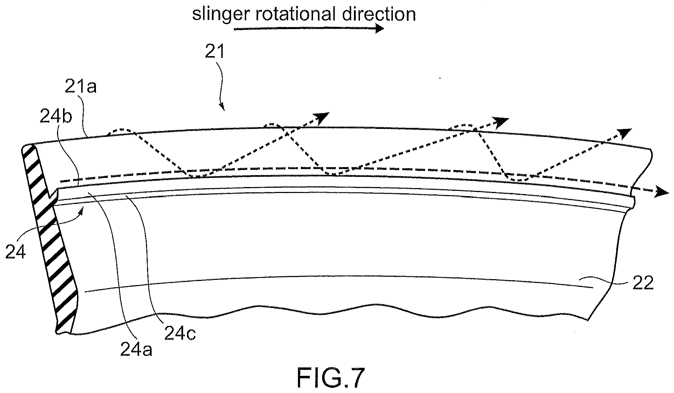

In such a case, as illustrated in Fig. 7, the circumferential-direction projection 24 is formed in the circular current region of the inner peripheral surface 22 of the end-face lip 21,whereby a target to be sealed which is retained in the circular current region while rotating is blocked by the outer peripheral surface 24b of the circumferential-direction projection 24 and thus, further oozing of the target to be sealed to the side of the root 21b of the end-face lip 21 is suppressed. In this case, the target to be sealed blocked by the circumferential-direction projection 24 can be continuously retained along the outer peripheral surface 24b of the circumferential-direction projection 24. Here, the height of the circumferential-direction projection 24 is set such that the portion of the circumferential-direction projection 24 having the maximum height does not contact the outer side surface 31d of the flange portion 31 and thus, the target to be sealed can be continuously retained while being blocked. That is, the circumferential-direction projection 24 receives the target to be sealed flowing on the inner peripheral surface 22 of the end-face lip 21 from the side of the tip 21a to the side of the root 21b, and can block the flow of the target to be sealed oozing from the side of the tip 21a to the side of the root 21b of the inner peripheral surface 22. Further, the outer peripheral surface 24b of the circumferential-direction projection 24 is higher than the inner peripheral surface 24c (see Fig. 4).and thus, when the target to be sealed collides with the outer peripheral surface 24b, the target to be sealed is bounced to the pumping region side and hence, the target to be sealed is led to the pumping region and, thereafter, is returned to the target-to-be-sealed side by receiving the pumping action of the grooves 33.

It is considered that the width of the pumping region in the radial direction varies according to rotational speed of the shaft. For this reason, the circumferential-direction projection 24 may be disposed at a position where although the circumferential-direction projection 24 is present in the circular current region, the outer peripheral surface 24b of the circumferential-direction projection 24 enters the pumping region when the width of the pumping region in the radial direction is expanded in accordance with rotational speed of the shaft.

When the slinger 3 is in a rest state, the target to be sealed which has oozed from the slinger contact portion 22a and the lip contact portion 32 flows down from the side of the tip 21a to the side of the root 21b along the inner peripheral surface 22 of the end-face lip 21 due to its own weight, however, the target to be sealed collides with the outer peripheral surface 24b of the circumferential-direction projection 24 and blocked. Accordingly, when the slinger 3 is in the rest state, that is, when the shaft 102 is in a rest state, the circumferential-direction projection 24 can asi at preventing a target to be sealed from oozing outside. To aim at preventing the target to be sealed from oozing outside when the slinger 3 is in the rest state, the outer peripheral surface 24b of the circumferential-direction projection 24 may extend in an inclined manner or in a bending manner toward the outer peripheral side with respect to the axis line x. This is because such a configuration allows the target to be sealed to be easily retained between the inner peripheral surface 22 of the end-face lip 21 and the outer peripheral surface 24b of the circumferential-direction projection 24.

In this manner, in the sealing apparatus 1, even if the target to be sealed further oozes to the circular current region beyond the pumping region where the pumping action is exerted, it is possible to block and retain the target to be sealed which has oozed by the circumferential-direction projection 24, and it is also possible to return this target to be sealed which has oozed to the pumping region. Accordingly, the target to be sealed can be returned to the target-to-be-sealed side by the pumping action.

The pumping action based on the groove 33 of the slinger 3 is reduced as rotational speed of the slinger 3 becomes higher. It can be considered that this is because the pumping region contracts toward the side of the slinger contact portion 22a and the lip contact portion 32 as the rotational speed of the slinger 3 becomes higher. Therefore, in the case where the target to be sealed oozes from the target-to-be-sealed side to the narrow space S, the target to be sealed which enters the circular current region increases as the rotational speed of the slinger 3 becomes higher. If an amount of the target to be sealed which circulates in the circular current region exceeds an amount of the target to be sealed which can be retained in the circular current region, the target to be sealed further oozes to the inside of a narrow space S. As a result, there may be a case where the target to be sealed further oozes outside the sealing apparatus 1.

In the sealing apparatus 1 according to the first embodiment of the present invention, as described above, even if the target to be sealed oozes to the circular current region beyond the pumping region, this oozing target to be sealed can be blocked and returned to the pumping region by the circumferential-direction projection 24, and further can be returned to the target-to-be-sealed side by the pumping action. In addition, the circumferential-direction projection 24 can guide the target to be sealed oozing to the circular current region beyond the pumping region such that the target to be sealed is retained in the circular current region in a stable manner. Accordingly, even if rotational speed of the slinger 3 becomes high, thus increasing the amount of the target to be sealed which is retained in the circular current region, this target to be sealed retained in the circular current region can be returned to the pumping region by the circumferential-direction projections 24, accordingly, it is possible to suppress that the amount of the target to be sealed which circulates in the circular current region exceeds the amount of the target to be sealed which can be retained in the circular current region. Further, even if the pumping action reduces due to the rotation of the slinger 3 at high speed, the target to be sealed can be returned to the pumping region by the circumferential-direction projection 24, accordingly, during the rotation of the slinger 3 at high speed, it is possible to increase the amount of the target to be sealed which can be returned to the target-to-be-sealed side by the pumping action upon high-speed rotation of the slinger 3. Further, the circumferential-direction projections 24 can guide the target to be sealed such that the target to be sealed is retained in the circular current region in a stable manner, accordingly, it is possible to increase the amount of the target to be sealed which can be retained in the circular current region, therefore, even if the pumping action reduces due to the rotation of the slinger 3 at high speed, it is possible to further suppress leakage of the target to be sealed to outside the narrow space S.

As described above, according to the sealing apparatus 1 according to the first embodiment of the present invention, even in the case where the pumping action by the grooves 33 of the slinger 3 is utilized, it is possible to suppress ooze of the target to be sealed regardless of a value of the rotational speed of the shaft.

### <Second embodiment>

Hereinafter, a sealing apparatus 64 according to a second embodiment of the present invention will be described with reference to Fig. 8. The sealing apparatus 64 according to the second embodiment of the present invention differs from the above-described sealing apparatus 1 according to the first embodiment of the present invention with respect to a point that a sub-circumferential-direction projection 30 is provided on the inner peripheral side of the circumferential-direction projection 24 in addition to a circumferential-direction projection 24.

An intermediate lip 29 also differs from that of the sealing apparatus 1 of the first embodiment, and the intermediate lip 29 has a conical cylindrical shape whose diameter becomes smaller as progresses toward the inner side in the axis line x direction. The tip of the intermediate lip 29 does not contact a slinger 3 in a state where the sealing apparatus 64 is used. However, the configuration is not limited to such a configuration, he intermediate lip 29 may be formed such that the tip of the intermediate lip 29 contacts the slinger 3. The intermediate lip 29 is formed to, in the usage state, in the case where a target to be sealed oozes inside over a slinger contact portion 22a where an end-face lip 21 and the slinger 3 contact each other, prevent the oozing target to be sealed from flowing out to the dust lip 28 side.

This sub-circumferential-direction projection 30 extends linearly toward the inner side along the axis line x direction from a base portion 25 of an elastic body portion 20, and extends to a position adjacent to an outer side surface 31d within a range where the sub-circumferential-direction projection 30 does not contact the outer side surface 31d of a flange portion 31 of the slinger 3. For example, a tip surface 24a of the circumferential-direction projection 24 and a tip surface 30a of the sub-circumferential-direction projection 30 are coplanar with each other in a direction perpendicular to the axis line x. However, the configuration is not limited to such a configuration, either one of the tip surface 24a or the tip surface 30a may be disposed more adjacent to the outer side surface 31d of the flange portion 31.

The sub-circumferential-direction projection 30 is defined by the tip surface 30a, an outer peripheral surface 30b, and an inner peripheral surface 30c. The shape of the sub-circumferential-direction projection 30 in cross section perpendicular to the extending direction along the circumferential direction is a rectangular shape. In a similar manner to the circumferential-direction projection 24 (Fig. 4), it is preferable that this shape in cross section be a trapezoidal shape where the outer peripheral surface 30b is longer than the inner peripheral surface 30c. However, the shape in cross section is not limited to such a shape, and may be any of various shapes.

In this case, in the sealing apparatus 64, even if there is the target to be sealed which oozes to a narrow space S further beyond the circumferential-direction projection 24 of the end-face lip 21, the target to be sealed is blocked by the outer peripheral surface 30b of the sub-circumferential-direction projection 30. Accordingly, the target to be sealed is suppressed from oozing to the outside of the narrow space S in a double manner by the circumferential-direction projection 24 and the sub-circumferential-direction projection 30. The number of sub-circumferential-direction projections 30 is not limited to one, and a plurality of sub-circumferential-direction projections 30 may be provided.

### <Third embodiment>

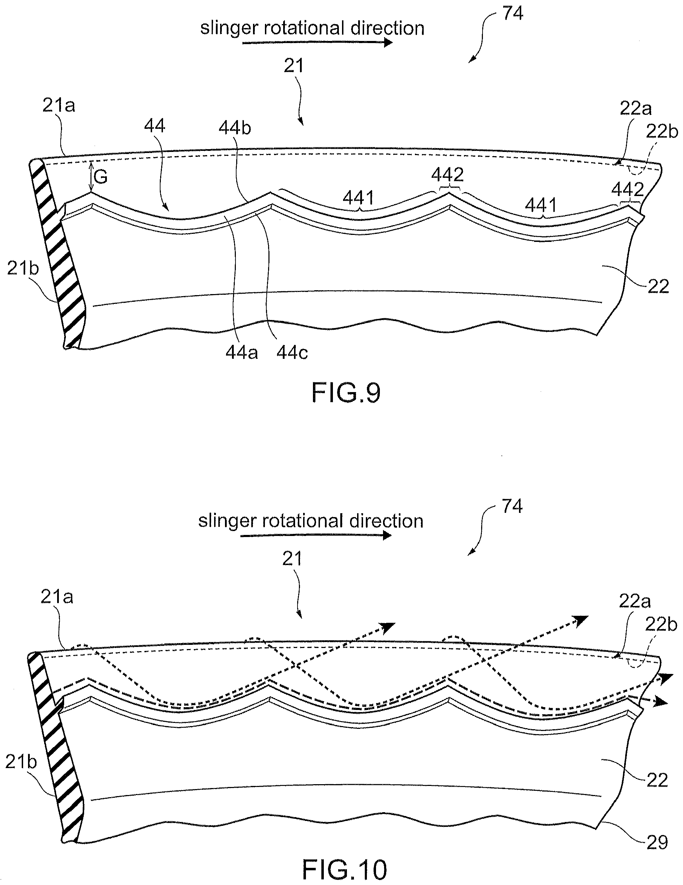

A sealing apparatus 74 according to a third embodiment of the present invention will be described next. This sealing apparatus 4 differs from the above-described sealing apparatus 1 according to the first embodiment of the present invention with respect to the mode of a circumferential-direction projection. The sealing apparatus 74 includes a circumferential-direction projection 44 having a shape as illustrated in Fig. 9 in place of the circumferential-direction projection 24. In the following description, the same reference numerals are assigned to the components having functions which are the same as or similar to those of the sealing apparatus 1 according to the above-described first embodiment of the present invention, description thereof will be omitted, and different configurations will be described.

Fig. 9 is a view which corresponds to the above-described Fig. 3, and a partially enlarged perspective view of an end-face lip 21 of an elastic body portion 20 of the sealing apparatus 74, and in Fig. 9, the end-face lip 21 is shown in a state where the elastic body portion 20 at a portion on the inner side from a base portion 25 is cut on a plane along the axis line x. In the sealing apparatus 74, in a similar manner to the circumferential-direction projection 24 of the above-described sealing apparatus 1, the circumferential-direction projection 44 extends in an annular shape around the axis line x, and at least one circumferential-direction projection 44 is provided in an annular shape having a fixed width on the same or substantially the same circumference centered on or substantially centered on the axis line x. However, also in this case, the configuration is not limited to such a configuration., a plurality of circumferential-direction projections 44 having different radii may be provided in a shape centered on or substantially centered on the axis line x. In a similar manner to the circumferential-direction projection 24, the circumferential-direction projection 44 is provided more on the other side (the outer side or the inner peripheral side) than the pumping region of the sealing apparatus 1. It is preferable that the circumferential-direction projection 44 be provided in the circular current region.

The circumferential-direction projection 44 projects from the end-face lip 21 in a region on the outer side of a slinger contact portion 22a in the axis line x direction. A tip surface 44a, which is the end portion of the circumferential-direction projection 44 on the inner side, is disposed at a position on the outer side of the slinger contact portion 22a in the axis line x direction. That is, the circumferential-direction projection 44 projects between an inner peripheral surface 22 of the end-face lip 21 and an outer side surface 31d of the flange portion 31. As described above, the circumferential-direction projection 44 is formed in a shape where the circumferential-direction projection 44 does not contact the slinger 3 in a state where the sealing apparatus 74 is used. Accordingly, there is no possibility that the circumferential-direction projection 44 increases sliding resistance with respect to the slinger 3.

The circumferential-direction projection 44 is formed in an annular shape which extends around the axis line x with a fixed width, and the entire circumferential-direction projection 44 is formed in a corrugated shape having an unevenness. Particularly, the circumferential-direction projection 44 includes a plurality of concave portions 441 which are formed to be recessed as viewed from the inner side or the outer peripheral side (upper side in Fig. 9), and a plurality of projecting portions 442 which are formed between the plurality of concave portions 441. Here, each concave portion 441 is a recessed portion which is formed in a recessed curved shape with a smooth curve. On the other hand, each projecting portion 442 is a protruding portion formed in an inverted V shape having an acute vertex. However, the configuration is not limited to such a configuration, the projecting portion 442 may be a protruding portion formed in a protruding curved shape with a smooth curve.

The shape of the circumferential-direction projection 44 in cross section perpendicular to the extending direction along the circumferential direction is a rectangular shape. However, the shape is not limited to a rectangular shape, and may be any of various shapes, such as a triangular shape, a quadrangular shape, a trapezoidal shape, or an inverted U shape, for example. At least in a state where the sealing apparatus 74 is used, it is preferable that an outer peripheral surface 44b, which is the surface of the circumferential-direction projection 44 facing the outer peripheral side, be a surface which faces the outer peripheral side and which extends along the axis line x, and it is preferable that the outer peripheral surface 44b be a surface which extends obliquely toward the outer peripheral side with respect to the axis line x.

Particularly, in a similar manner to the circumferential-direction projection 24 illustrated in Fig. 4, the shape of the circumferential-direction projection 44 in cross section perpendicular to the extending direction (see Fig. 2) may be a trapezoidal shape, for example. In this case, it is preferable that the circumferential-direction projection 44 have a trapezoidal shape where the outer peripheral surface 44b is longer than an inner peripheral surface 44c, which is the surface of the circumferential-direction projection 44 facing inner peripheral side, and the circumferential-direction projection 44 has, between the inner peripheral surface 44c and the outer peripheral surface 44b, a tip surface 44a which is inclined so as to further separate from the inner peripheral surface 22 toward the outer peripheral side from the inner peripheral side.

Action of the sealing apparatus 74 having the above-described configuration will be described next. Fig. 10 is a view for illustrating a state of flow of a target to be sealed which is caused by action of the circumferential-direction projection 44 on the end-face lip 21. In the sealing apparatus 74, as illustrated in Fig. 10, in a similar manner to the above-described sealing apparatus 1, as indicated by a broken line and dotted lines, the circumferential-direction projection 44 acts on the target to be sealed which has oozed to the narrow space S in a similar manner to the circumferential-direction projection 24 of the above-described sealing apparatus 1, and functions as a blocking member in a similar manner to the circumferential-direction projection 24 of the above-described sealing apparatus 1 in a state where the shaft 102 is at rest.

As described above, the sealing apparatus 74 can also provide operational effects which are similar to those provided by the sealing apparatus 1 of the first embodiment. Specifically, even if the target to be sealed oozes further to the circular current region beyond the pumping region where the pumping action is exerted, it is possible to block and retain the oozing target to be sealed by the circumferential-direction projection 44, and it is also possible to return this target to be sealed to the pumping region. Accordingly, the target to be sealed can be returned to the target-to-be-sealed side by the pumping action.

The circumferential-direction projection 44 can retain the larger amount of target to be sealed in the recessed region of the concave portion 441 compared with the circumferential-direction projection 24 in the first embodiment. Accordingly, even if the rotation of the slinger 3 becomes high-speed rotation so that the amount of the target to be sealed retained in the circular current region increases, it is possible to return the target to be sealed to the pumping region while the increased amount of the target to be sealed is retained in the circular current region. Further, in the sealing apparatus 74, the target to be sealed flows along the recessed shape of the concave portions 441 of the circumferential-direction projection 44 and hence, it is possible to naturally return the target to be sealed to the pumping region.

As described above, in the sealing apparatus 74, it is possible to block the target to be sealed by the circumferential-direction projection 44, and it is also possible to return the target to be sealed to the pumping region and hence, the leakage of the target to be sealed to the outside can be further suppressed. Thus, according to the sealing apparatus 74 of the third embodiment of the present invention, even when pumping action brought about by grooves 33 of the slinger 3 is utilized, oozing of the target to be sealed can be suppressed regardless of a value of the rotational speed of the shaft.

### <Fourth embodiment

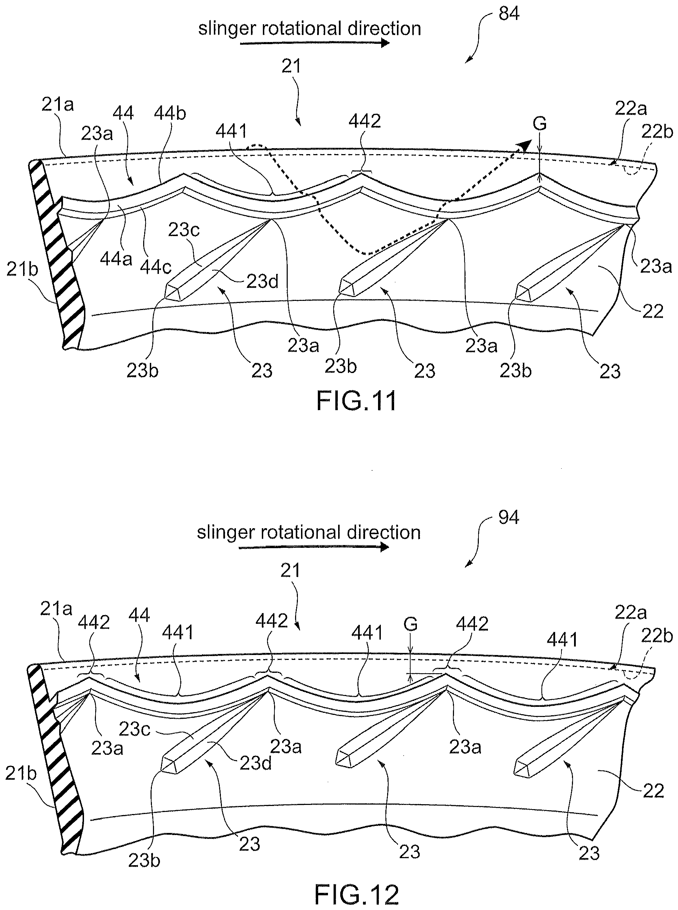

Subsequently, as illustrated in Fig. 11, a sealing apparatus 84 according to a fourth embodiment of the present invention will be described. The sealing apparatus 84 according to the fourth embodiment of the present invention differs from the above-described sealing apparatus 74 according to the third embodiment of the present invention with respect to a point that the sealing apparatus 84 includes a plurality of radial-direction projections 23 in addition to a circumferential-direction projection 44. Hereinafter, the same reference numerals are assigned to the components having functions which are the same as or similar to those of the above-described sealing apparatus 74 according to the third embodiment of the present invention, description thereof will be omitted, and different configurations will be described.

Fig. 11 is a view which corresponds to the above-described Fig. 9, and a partially enlarged perspective view of an end-face lip 21 of an elastic body portion 20 of the sealing apparatus 84, and in Fig. 11, the end-face lip 21 is shown in a state where the elastic body portion 20 at a portion on the inner side from a base portion 25 is cut on a plane along the axis line x. The circumferential-direction projection 44 of the sealing apparatus 84 has the same configuration as the circumferential-direction projection 44 of the above-described sealing apparatus 74 of the third embodiment, and extends in an annular shape around the axis line x. On this end-face lip 21, a plurality of radial-direction projections 23 are arranged on the inner peripheral side (outer side) of the circumferential-direction projection 44 at equal angular intervals or substantially equal angular intervals in a circumferential direction and at equal pitch intervals or substantially equal pitch intervals on the same or substantially the same circumference.

The radial-direction projections 23 extend in a spiral manner in the rotation direction of a shaft 102 (slinger 3) from another side (the inner peripheral side or the outer side) to one side (the outer peripheral side or the inner side), and are formed on the inner peripheral side of a slinger contact portion 22a, which is a portion of the end-face lip 21 where the end-face lip 21 contacts a flange portion 31 of the slinger 3, and on the inner peripheral side of the circumferential-direction projection 44. That is, each radial-direction projection 23 extends obliquely with respect to the rotation direction of the slinger 3 from the side of a root 21b of the end-face lip 21 to the side of the tip 21a.

That is, an inner end 23a, which is the end portion of the radial-direction projection 23 on the inner side (outer peripheral side), extends toward substantially the center of a concave portion 441 of the circumferential-direction projection 44 provided along the inner peripheral surface 22 of the end-face lip 21, and an outer end 23b, which is the end portion of the radial-direction projection 23 on the outer side (inner peripheral side), extends to the side of the root 21b of the end-face lip 21. Here, the inner end 23a of the radial-direction projection 23 and the concave portion 441 of the circumferential-direction projection 44 contact each other. However, the configuration is not limited to such a configuration, the inner end 23a of the radial-direction projection 23 and the concave portion 441 of the circumferential-direction projection 44 may be separated from each other.

Further, in a state where the sealing apparatus 84 is used, the respective radial-direction projections 23 are formed in a shape such that the radial-direction projections 23 do not contact the slinger 3. That is, in the usage state of the sealing apparatus 84, a height of the radial-direction projections 23 from the inner peripheral surface 22 is set so that the radial-direction projections 23 do not contact the outer side surface 31d of the flange portion 31 of the slinger 3. In the fourth embodiment, the height of the radial-direction projection 23 from the inner peripheral surface 22 becomes gradually higher from the inner end 23a toward the outer end 23b.

As described above, on the inner peripheral surface 22 of the end-face lip 21, each radial-direction projection 23 is formed to have a rib shape, and a side surface 23c, which is a surface of the radial-direction projection 23 facing the outer peripheral side along the circumferential direction, and a side surface 23d, which is a surface of the radial-direction projection 23 facing the inner peripheral side along the circumferential direction, extend obliquely with respect to the inner peripheral surface 22 of the end-face lip 21. However, the shape is not limited to this, and the side surfaces 23c, 23d may extend while being orthogonal to or substantially orthogonal to the inner peripheral surface 22.

The height of the radial-direction projections 23 from the inner peripheral surface 22 is not limited to the above-described specific shape. The height of the radial-direction projections 23 from the inner peripheral surface 22 may be fixed from the inner ends 23a to the outer ends 23b, or the height from the inner peripheral surface 22 may become lower toward the outer ends 23b from the inner ends 23a. Further, the height of the radial-direction projections 23 from the inner peripheral surface 22 from the inner ends 23a to the outer ends 23b may be various kinds of combination of the above-described becoming higher, becoming lower, being fixed, or the like. Further, the shape of the radial-direction projections 23 on a cross-section perpendicular to the extending direction may be various shapes such as, for example, a triangle, a rectangle, a trapezoid and an inverted U shape. Because the radial-direction projections 23 are formed in a shape such that the radial-direction projections 23 do not contact the slinger 3 in the usage state of the sealing apparatus 84, sliding resistance to the slinger 3 does not increase by the radial-direction projections 23.

Further, the shape of the radial-direction projections 23 in the extending direction may be various shapes such as a shape which is tapered from the outer ends 23b toward the inner ends 23a and a shape in which a width in a direction orthogonal to the extending direction changes toward the extending direction between the outer ends 23b and the inner ends 23a. Further, the radial-direction projections 23 may extend straight or may extend in a curved manner between the inner ends 23a and the outer ends 23b.

As indicated by a broken line in Fig. 11, even if the target to be sealed flows to the side of the root 21b of the end-face lip 21 beyond the concave portion 441 of the circumferential-direction projection 44, the target to be sealed collides with the side surface 23c of the radial-direction projection 23 which is present on the inner peripheral side of the circumferential-direction projection 44 so that the target to be sealed is bounced on, or the target to be sealed is led to the inner end 23a along the side surface 23c and, thereafter, is caused to move beyond the concave portion 441 of the circumferential-direction projection 44 again and, then, can be returned to the pumping region. At this point of operation, in the circumferential-direction projection 44, the inner peripheral surface 44c is shorter in length and lower in height than the outer peripheral surface 44b and hence, the target to be sealed can be easily returned to the pumping region side. Further, as described above, there is also the target to be sealed which moves beyond the circumferential-direction projection 44 and further moves to the side of the root 21b of the end-face lip 21. Accordingly, it is preferable to arrange the radial-direction projections 23 such that one radial-direction projection 23 partially overlaps, in the axis line x direction, with another the radial-direction projection 23 disposed adjacent to the one radial-direction projection 23 in the circumferential direction when seen from the inner peripheral side (outer side) to the outer peripheral side (inner side).

Further, in order to increase a portion where the radial-direction projections 23 disposed adjacent to each other overlap with each other in the axis line x direction when seen from the inner peripheral side to the outer peripheral side so as to improve a function to return the target to be sealed which has moved beyond the radial-direction projection 23 to the pumping region by another radial-direction projection 23 disposed adjacent to the one radial-direction projection 23, it is preferable to adjust an extending direction (angle) of the radial-direction projections 23 and an interval (pitch) between the radial-direction projections 23 which are adjacent to each other. It is also preferable that the radial-direction projections 23 be adjacent to each other at equal intervals so that the end-face lip 21 has the above-described functions of the radial-direction projections 23 equally in the circumferential direction.

### <Fifth embodiment>

Hereinafter, a sealing apparatus 94 according to a fifth embodiment of the present invention will be described with reference to drawings. The sealing apparatus 94 according to the fifth embodiment of the present invention differs from the above-described sealing apparatus 84 according to the fourth embodiment of the present invention with respect to the positions of radial-direction projections 23 with respect to a circumferential-direction projection 44 in the circumferential direction. Hereinafter, the same reference numerals are assigned to components having functions which are the same as or similar to those of the above-described sealing apparatus 84 according to the fourth embodiment of the present invention, description thereof will be omitted, and only different part will be described.

Fig. 12 is a partially enlarged perspective view of an end-face lip 21 of an elastic body portion 20 of the sealing apparatus 94. In a similar manner to the above-described sealing apparatus 84, this sealing apparatus 94 is a sealing apparatus for sealing an annular gap between a shaft 102 and a hole into which the shaft 102 is inserted.

In this case, an inner end 23a, which is the end portion of the radial-direction projection 23 on the inner side (outer peripheral side), extends toward the recess of a projecting portion 442 formed between one concave portion 441 and another concave portion 441 of the circumferential-direction projection 44, and an outer end 23b, which is the end portion of the radial-direction projection 23 on the outer side (inner peripheral side), extends to the side of a root 21b of the end-face lip 21. That is, the radial-direction projections 23 in the fifth embodiment have the same configuration as the radial-direction projections 23 in the fourth embodiment, however, the positions where the radial-direction projections 23 in the fifth embodiment are disposed are displaced in the circumferential direction from the positions where the radial-direction projections 23 in the fourth embodiment are disposed. In this case, the radial-direction projections 23 in the fifth embodiment are disposed at positions closer to the outer peripheral side in the radial direction than the radial-direction projections 23 in the fourth embodiment. Accordingly, it is possible to return the target to be sealed which has moved beyond the circumferential-direction projection 44 to the pumping region by the radial-direction projections 23 within a short time.

### <Sixth embodiment

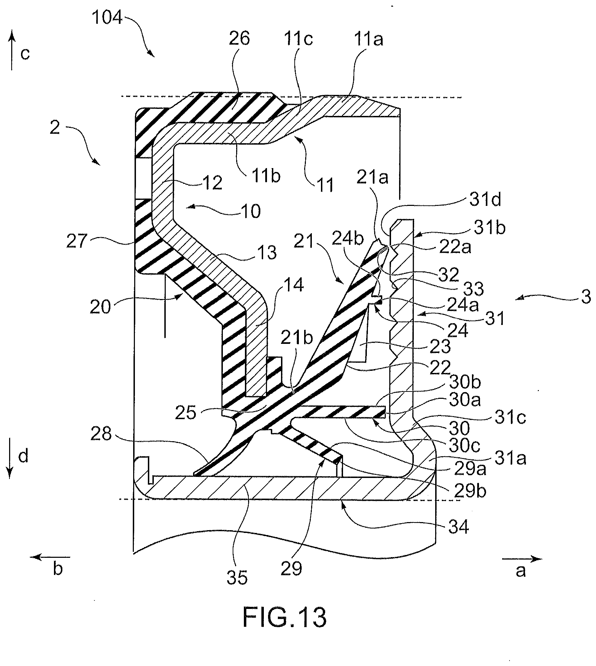

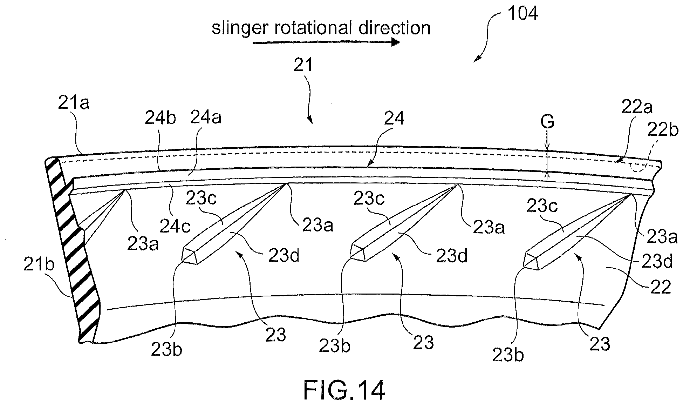

Hereinafter, a sealing apparatus 104 according to a sixth embodiment of the present invention will be described with reference to Fig. 13 and Fig. 14. The sealing apparatus 104 according to the sixth embodiment of the present invention differs from the above-described sealing apparatus 84 according to the fourth embodiment of the present invention with respect to a point that the sealing apparatus 104 uses the circumferential-direction projection 24 in the first embodiment in place of the circumferential-direction projection 44 of the sealing apparatus 84.

In this sealing apparatus 104, an inner end 23a, which is the end portion of each radial-direction projection 23 on the inner side (outer peripheral side), extends toward an inner peripheral surface 24c of the circumferential-direction projection 24, and an outer end 23b, which is the end portion of each radial-direction projection 23 on the outer side (inner peripheral side), extends to the side of a root 21b of an end-face lip 21. Also in this case, the combination between the circumferential-direction projection 24 and the plurality of radial-direction projections 23 can provide the operational effects of the fourth and fifth embodiments in addition to the operational effects of the first embodiment.

In the fourth embodiment to the sixth embodiment, the cases of using the annular circumferential-direction projection 24, 44 have been described, however, the present invention is not limited to such cases, a plurality of clearances (grooves) may be formed on the circumferential-direction projection 24, 44 at fixed intervals. Particularly, by forming the clearances (grooves) on the circumferential-direction projection 24, 44 at positions in the vicinity of the inner ends 23a of the radial-direction projections 23, it is possible to efficiently return the target to be sealed, which is led to the pumping region along the side surfaces 23c of the radial-direction projections 23, to the pumping region within a short time by causing the target to be sealed to pass through the clearances (grooves) of the circumferential-direction projection 24, 44.

### <Other embodiments>

The description has been made such that the above-described radial-direction projections 23 extend in a spiral manner. However, the radial-direction projections 23 may extend on the inner peripheral surface 22 of the end-face lip 21 to form various shapes, and may be arranged on the inner peripheral surface 22 of the end-face lip 21 in a spiral manner. Further, each of the side surfaces 23c, 23d of the radial-direction projection 23 may have a planar shape or a curved shape.

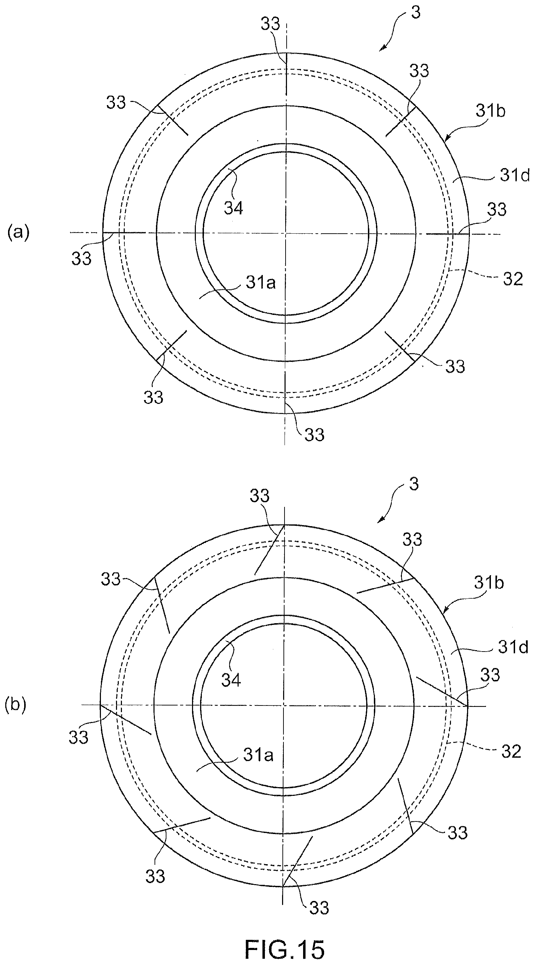

As described above, the shape of the groove 33 provided at the slinger 3 is not limited to the shape of the screw (four-start screw) illustrated in Fig. 4, and may be other shapes. For example, as illustrated in Fig. 15(a), the groove 33 may be a groove extending in a radial manner centered on or substantially centered on the axis line x from the inner peripheral side toward the outer peripheral side, or, as illustrated in Fig. 15(b), may be a groove extending while tilting in the circumferential direction.

While, in the sealing apparatuses 1, 64, 74, 84, 94 and 104, the elastic body portion 20 includes the dust lip 28 and the intermediate lip 29, the elastic body portion 20 does not have to include the dust lip 28 and the intermediate lip 29, and may include only one of the dust lip 28 and the intermediate lip 29.

Further, while description is provided that the sealing apparatuses 1, 64, 74, 84, 94 and 104 according to the present embodiment are applied to a crank hole of an engine, an application target of the sealing apparatus according to the present invention is not limited to this, and the present invention can be applied to all configurations which can utilize the effects provided by the present invention, such as other vehicles, general-purpose machine and industrial machine.

### List of Reference Signs

- 1, 64, 74, 84, 94, 104: sealing apparatus
- 2: sealing apparatus body
- 3: slinger
- 10: reinforcing ring
- 11: tubular portion
- 11a: outer peripheral side cylindrical portion
- 11b: inner peripheral side cylindrical portion
- 11c: connecting portion
- 12, 14: disk portion
- 13: conical ring portion
- 20: elastic body portion
- 21: end-face lip
- 21a: tip
- 21b: root
- 22: inner peripheral surface
- 22a: slinger contact portion
- 22b: outer edge
- 23: radial-direction projection
- 23a: inner end
- 23b: outer end
- 23c, 23d: side surface
- 24, 44: circumferential-direction projection
- 24a, 44a: tip surface
- 24b, 44b: outer peripheral surface
- 24c: inner peripheral surface
- 25: base portion
- 26: gasket portion
- 27: rear cover portion
- 28: dust lip
- 29: intermediate lip
- 29a: outer peripheral surface
- 30: sub-circumferential-direction projection
- 30a: tip surface
- 30b: outer peripheral surface
- 30c: inner peripheral surface
- 31: flange portion
- 31a: inner peripheral side disk portion
- 31b: outer peripheral side disk portion
- 31c: connecting portion
- 31d: outer side surface
- 32: lip contact portion
- 33: groove
- 34: tubular portion
- 35: cylindrical portion
- 35a: inner peripheral surface
- 35b: outer peripheral surface
- 42: clearance
- 52e: end-face
- 100: housing
- 101: shaft hole
- 101a: inner peripheral surface
- 102: shaft
- 102a: outer peripheral surface
- 441: concave portion
- 442: projecting portion
- G: interval
- S: narrow space
- x: axis line

## Claims

1. A sealing apparatus for sealing an annular gap between a shaft and a hole into which the shaft is to be inserted, the sealing apparatus being **characterized by** comprising:
a sealing apparatus body to be fitted into the hole; and
a slinger to be mounted on the shaft, wherein
the sealing apparatus body includes a reinforcing ring annular around an axis line, and an elastic body portion which is formed of an elastic body attached to the reinforcing ring and which is annular around the axis line,
the slinger includes a flange portion which is a portion extending toward an outer peripheral side, and annular around the axis line,
the elastic body portion includes an end-face lip which is a lip extending toward one side in a direction of the axis line, contacting the flange portion from another side in the direction of the axis line, and annular around the axis line,
at least one groove is formed on the other side of the flange portion of the slinger, and
at least one circumferential-direction projection is formed on an inner peripheral surface of the end-face lip, the circumferential-direction projection extending in an annular shape around the axis line, and projecting between the inner peripheral surface of the end-face lip and a surface of the flange portion on the other side.

2. The sealing apparatus according to claim 1,
**characterized in that** the circumferential-direction projection has a corrugated shape having an unevenness.

3. The sealing apparatus according to claim 1 or 2,
**characterized in that** the circumferential-direction projection is disposed on an inner peripheral side of a slinger contact portion which is a portion where the end-face lip contacts the flange portion of the slinger.

4. The sealing apparatus according to any one of claims 1 to 3, **characterized in that** a radial-direction projection extending along a radial direction is formed on the inner peripheral surface of the end-face lip in addition to the circumferential-direction projection, and the circumferential-direction projection is disposed on an outer peripheral side of the radial-direction projection.

5. The sealing apparatus according to claim 3,
**characterized in that** the circumferential-direction projection is formed on the end-face lip such that the circumferential-direction projection is separated from the slinger contact portion toward the inner peripheral side by a predetermined interval.

6. The sealing apparatus according to any one of claims 1 to 5, **characterized in that** the groove formed on the slinger is a screw groove.
